# EUROPÄISCHE PATENTSCHRIFT

(11) **EP 1 585 914 B1**
(45) Veröffentlichungstag und Bekanntmachung des Hinweises auf die Patenterteilung: **07.11.2007**
(21) Anmeldenummer: 03738014.4
(22) Anmeldetag: 11.06.2003
(51) Int. Cl.: F16H 61/00

(54) **TOROID-GETRIEBESCHEIBE**
TOROIDAL GEARBOX DISC
DISQUE DE TRANSMISSION TOROIDAL

(30) Priorität: 02.07.2002 DE 10229579
(43) Veröffentlichungstag der Anmeldung: 19.10.2005
(73) Patentinhaber: Bayerische Motoren Werke Aktiengesellschaft, 80809 München (DE); GETRAG Getriebe- und Zahnradfabrik Hermann Hagenmeyer GmbH & Cie KG, 74199 Untergruppenbach (DE)
(72) Erfinder: OHNEMUS, Ulrich, 80285 Hattenhofen-Haspelmoor (DE); RIEDER, Ekkehard, 80997 München (DE); WOLF, Lothar, 81539 München (DE); RÜHLE, Günter, 74369 Löchgau (DE); KIRCHNER, Markus, 71636 Ludwigsburg (DE); TREFZ, Markus, 74245 Löwenstein (DE); LAUTENSCHLAGER, Dirk, 73760 Ostfildern (DE)
(86) Internationale Anmeldenummer: PCT/EP2003/006099
(87) Internationale Veröffentlichungsnummer: WO 2004/005767

(56) Entgegenhaltungen:
- DE-C- 840 339
- GB-A- 1 146 324
- US-A- 4 126 052
- US-A- 6 074 324

## Beschreibung

Die vorliegende Erfindung betrifft eine Toroid-Getriebescheibe gemäß dem Oberbegriff des Patentanspruches 1.

Eine derartige Toroidgetriebescheibe ist aus der GB 1146324 bekannt. Zum relevanten Stand der Technik zählen ferner die US 4 126 052, US 6 074 324 sowie die DE 840 339.

Aus der DE 199 62 694 A1 ist ein Toroid-Getriebe mit einer Eingangsscheibe und einer Ausgangsscheibe bekannt,
wobei zur Drehmomentenübertragung von der Eingangsscheibe auf die Ausgangsscheibe verschwenkbare Roller vorgesehen sind. Die Ausgangsscheibe ist auf einer Welle gelagert und über einen Keil drehfest mit einem Abtriebszahnrad verbunden. Zur Drehmomentenübertragung von der Eingangsscheibe auf die Ausgangsscheibe ist eine relativ hohe Kontaktkraft zwischen den Scheiben und dem Roller erforderlich. Die Scheiben sind daher sehr steif, das heißt massiv und schwer ausgeführt.

Aufgabe der Erfindung ist es, eine Toroid-Getriebescheibe zu schaffen, die eine hohe Steifigkeit und ein relativ geringes Gewicht bzw. eine relativ geringe Massenträgheit aufweist.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Das Grundprinzip der Erfindung besteht in einer Toroidgetriebescheibe mit "Hybridbauweise". Unter dem Begriff "Hybridbauweise" sind gemäß der Erfindung folgende beiden Grundvarianten zu verstehen:
- Eine Toroid-Getriebescheibe bestehend aus einem sehr steifen und leichten Grundkörper mit einer konkav gekrümmten Lauffläche. Auf den Grundkörper ist zumindest im Bereich der Lauffläche eine Lauf- oder Traktionsschicht aufgebracht. Die Lauf- oder Traktionsschicht ist hinreichend hart, um die beim Abrollen von Rollern eines ToroidGetriebevariators auftretenden Kräfte aufzunehmen.
- Eine Toroid-Getriebescheibe, die zwei auf einer Welle angeordnete Teilscheiben aufweist, welche aus unterschiedlichen Materialen bestehen. Eine der Teilscheiben fungiert als "Traktionsscheibe", in der die konkav gekrümmte Lauffläche ausgebildet ist. Koaxial zur Traktionsscheibe ist eine Stützscheibe angeordnet, die Axialkräfte, welche von den Rollern über die Lauffläche in die Traktionsscheibe eingeleitet werden, abstützt. Die Stützscheibe ist über eine Welle-Nabe-Verbindung drehfest mit der Welle verbunden. Die Traktionsscheibe und die Stützscheibe können formschlüssig, stoffschlüssig oder kraftschlüssig in Drehrichtung miteinander verbunden sein.

Vorzugsweise besteht die Traktionsscheibe aus einem Material, das einen geringeren Elastizitätsmodul (E-Modul) aufweist als das Material der Stützscheibe. Die Traktionsscheibe besteht im wesentlichen aus einem durchgehärteten oder zumindest im Bereich der Lauffläche bis in eine gewisse Tiefe gehärteten Material, z.B. aus einem hochreinen luftgehärteten Wälzlagerstahl. Aus Gründen der Massenträgheit ist es von Vorteil, wenn das Material der Stützscheibe eine geringere Dichte aufweist als das Material der Traktionsscheibe. Aus Steifigkeitsgründen muss die Stützscheibe nämlich gewisse "Mindestabmessungen" bzw. eine gewisse Mindestgröße aufweisen, so dass die Dichte des Stützscheibenmaterials nicht zu groß, d.h. nicht zu schwer sein sollte. Das Material der Stützscheibe sollte jedoch einen möglichst hohen E-Modul aufweisen.

Als Material für die Stützscheibe kann beispielsweise ein Metall-Matrixkompositwerkstoff, z.B. ein Stahl-Matrix-Werkstoff verwendet werden. Im Unterschied zu herkömmlichen Toroidgetrieben, bei denen die Scheiben aus hochreinem Wälzlagerstahl bestehen, weist ein Stahl- Matrixkompositwerkstoff einen um circa 40% größeren E-Modul (292 GPa im Vergleich zu 210 GPa) auf und eine um circa 20% geringere Dichte (6,5 kg/dm³ im Vergleich zu 7,8 kg/dm³). Durch die "Aufsplittung" der Toroidgetriebescheibe in zwei Teilscheiben kombiniert mit einer geeigneten Werkstoffwahl kann im Vergleich zu einer herkömmlichen Toroidgetriebescheibe eine deutliche Gewichtseinsparung erreicht werden.

Zur Drehmomentenübertragung von der Traktionsscheibe auf die Stützscheiben bzw. umgekehrt können diese formschlüssig miteinander gekoppelt sein. Die Traktionsscheibe und die Stützscheibe können beispielsweise in Umfangsrichtung verteilt angeordnete Ausnehmungen aufweisen, in die jeweils eine Kugel eingreift, über die das Drehmoment übertragen wird. Eine derartige Kugel-Kalotten-Mitnahme hat den Vorteil, dass kaum oder nur sehr geringe Kerbwirkungen auftreten.

Die Traktionsscheibe kann beispielsweise aus hochreinem Wälzlagerstahl hergestellt sein. Die Stützscheibe hingegen kann aus hochfesten und leichten Keramikmaterialen hergestellt sein, wie zum Beispiel
- Al₂O₃, E-Modul: 380 GPa, Dichte 3,98 kg/dm³
- Si₃N₄, E-Modul: 305 GPa, Dichte 3,20 kg/dm³
- Al₂O₃ZrO₃, E-Modul: 350 GPa, Dichte 4,37 kg/dm³

Entsprechend der Volumenaufteilung auf Traktions- und Stützscheibe ergibt sich im Vergleich zu herkömmlichen einstückigen Toroid-Getriebescheiben aus Wälzlagerstahl eine deutliche Gewichtseinsparung.

Alternativ dazu kann die Stützscheibe aus einem Metall-Matrixkompositwerkstoff hergestellt sein, zum Beispiel aus einem Titan-MMC, das heißt aus Ti₆Al₆V₂Sn+10% TiC-Partikeln mit einem E-Modul von 142 GPa und einer Dichte von 4,56 kg/dm³.

Alternativ zu einer formschlüssigen Drehkopplung der Traktionsscheibe und der Stützscheibe können diese auch rein kraftschlüssig gekoppelt sein. Aufgrund der hohen Axialkräfte, die in einem Toroid-Getriebevariator auftreten, kann nämlich bei einem hinreichend hohem Reibkoeffizienten zwischen der Traktions- und der Stützscheibe das Drehmoment auch rein kraft- bzw. reibschlüssig übertragen werden.

Wie bereits erwähnt, ist die Stützscheibe über eine Welle-Nabe-Verbindung drehfest mit einer Welle verbunden. Der "stützscheibenseitige" Teil der Welle-Nabe-Verbindung kann vorzugsweise bereits bei der Herstellung der Stützscheibe, d.h. im Urformprozess hergestellt werden, was den Vorteil hat, dass nicht oder nur in geringem Umfang Nacharbeit erforderlich ist. Die Stützscheibe mit einem Kerbzahnprofil als Welle-Nabe-Verbindung wird beispielsweise durch Sintern hergestellt.

Die aufwändige und insbesondere bei Stahl-Matrix-Werkstoffen sehr kostenintensive Wellenzentrierung erfolgt über die Innenbohrung der Traktionscheibe. Die Innenbohrung kann aus Belastungsgründen ballig ausgeformt sein.

Im folgenden wird die Erfindung von Ausführungsbeispielen im Zusammenhang mit der Zeichnung näher erläutert. Es zeigen:
- Figur 1: ein erstes Ausführungsbeispiel einer Toroid-Getriebescheibe in Schnittdarstellung;
- Figur 2: eine perspektivische Ansicht der Toroid-Getriebescheibe der Figur 1;
- Figur 3: ein Ausführungsbeispiel einer Toroid-Getriebescheibe; und
- Figur 4: eine Toroid-Getriebescheibe, bei der die Traktionsscheibe hydraulisch axial verschiebbar ist.

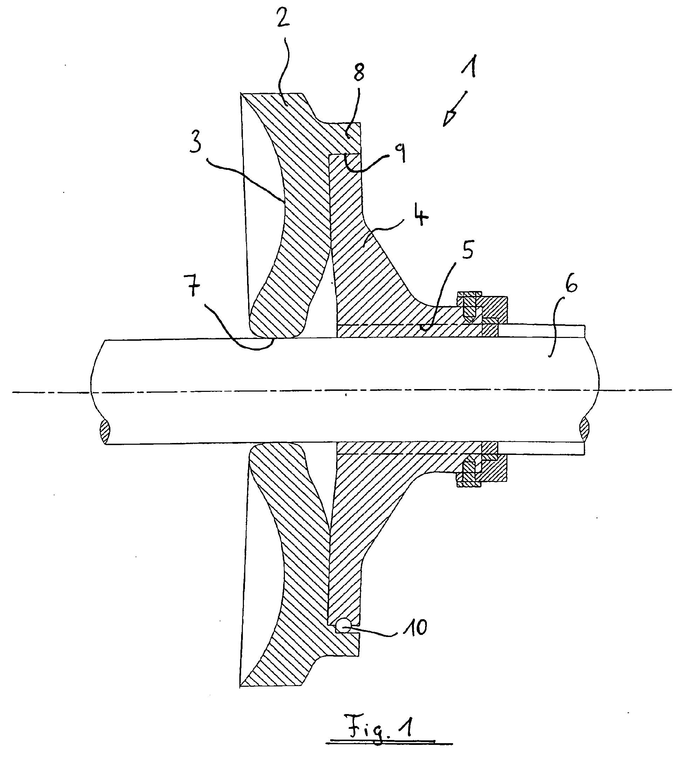

**Figur 1** zeigt eine Toroid-Getriebscheibe 1 bestehend aus einer Lauf- oder Traktionsscheibe 2, die eine umlaufende konkav gekrümmte Lauffläche 3 aufweist und einer Stützscheibe 4, die hier über eine Keilverzahnung 5 drehfest mit einer Welle 6 verbunden ist. Alternativ dazu kann auch ein Zahnwellenprofil vorgesehen sein. Die Traktionsscheibe 2 weist eine ballige Ausnehmung 7 auf, die hier an der Welle 6 anliegt. Über die ballige Ausnehmung 7 wird die Traktionsscheibe auf der Welle 6 zentriert.

Die Stützscheibe 2 weist ferner einen umlaufenden sich in Axialrichtung erstreckenden Zentrierbund 8 auf, der den Außenumfang 9 der Stützscheibe 4 umgreift und der die Traktionsscheibe 2 relativ zur Stützscheibe 4 zentriert. Am Außenumfang 9 bzw. am Zentrierbund 8 sind über den Umfang verteilt mehrere Ausnehmungen vorgesehen, in denen jeweils eine Kugel 10 vorgesehen ist, welche die Traktionsscheibe 2 in Umfangsrichtung formschlüssig, das heißt drehfest mit der Stützscheibe 4 koppeln. Die Kugeln 10 dienen also zur Drehmomentenübertragung von der Traktionsscheibe 2 auf die Stützscheibe 4 bzw. umgekehrt (Kugel-Kalotten-Mitnahme).

Ganz wesentlich ist, dass die Traktionsscheibe 2 aus einem anderen Material hergestellt ist als die Stützscheibe 4. Die Traktionsscheibe 2 weist einen kleineren E-Modul als die Stützscheibe 4 auf. Die Stützscheibe weist einen möglichst großen E-Modul auf. Ferner weist die Traktionsscheibe 2 eine größere Dichte als die Stützscheibe 4 auf. Die Stützscheibe 4 ist somit sehr steif und gleichzeitig leicht. Die Traktionsscheibe 2 hingegen weist eine sehr hohe Festigkeit auf und kann daher problemlos die von den Rollern auf die Lauffläche 3 ausgeübten hohen Flächenpressungen (Hertz'sche Pressung) aufnehmen und Drehmomente übertragen.

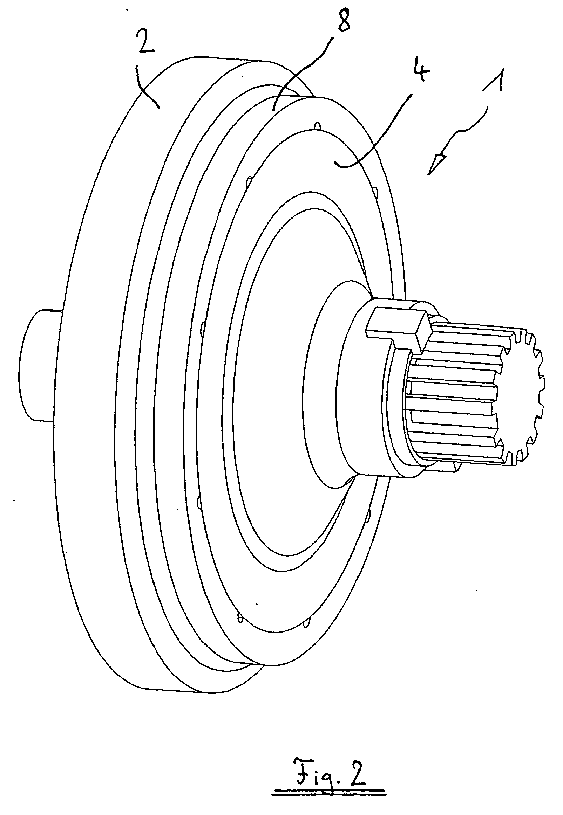

**Figur 2** zeigt eine perspektivische Darstellung der Toroid-Getriebescheibe von der Stützscheibe 4 aus gesehen.

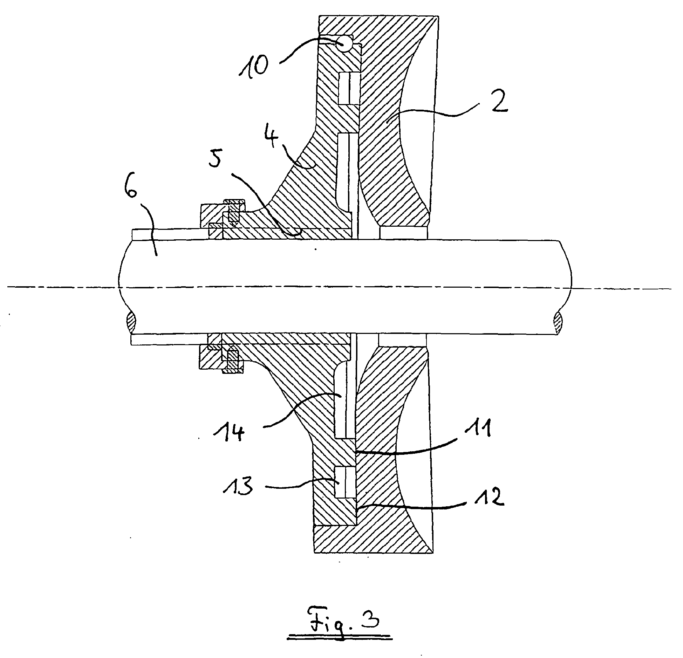

**Figur 3** zeigt ein Ausführungsbeispiel, bei dem an der Vorderseite der Stützscheibe 4 zwei ringförmige Kontaktflächen 11, 12 vorgesehen sind. Über die ringförmigen Kontaktflächen 11, 12 werden die in die Traktionsscheibe 2 eingeleiteten Axialkräfte aufgenommen. Zwischen den ringförmigen Kontaktflächen 11, 12 und radial innerhalb der inneren ringförmigen Kontaktfläche 11 weist die Stützscheibe 4 Materialaussparungen 13, 14 auf, welche das Gewicht der Stützscheibe 4 weiter verringern, ohne die Steifigkeit wesentlich zu beeinträchtigen. Zur Übertragung von Drehmomenten von der Traktionsscheibe 2 auf die Stützscheibe 4 und umgekehrt sind ähnlich wie beim Ausführungsbeispiel der Figur 1 Kugeln 10 vorgesehen. Auch hier ist die Stützscheibe 4 über eine Keilverzahnung 5 mit der Welle 6 drehgekoppelt.

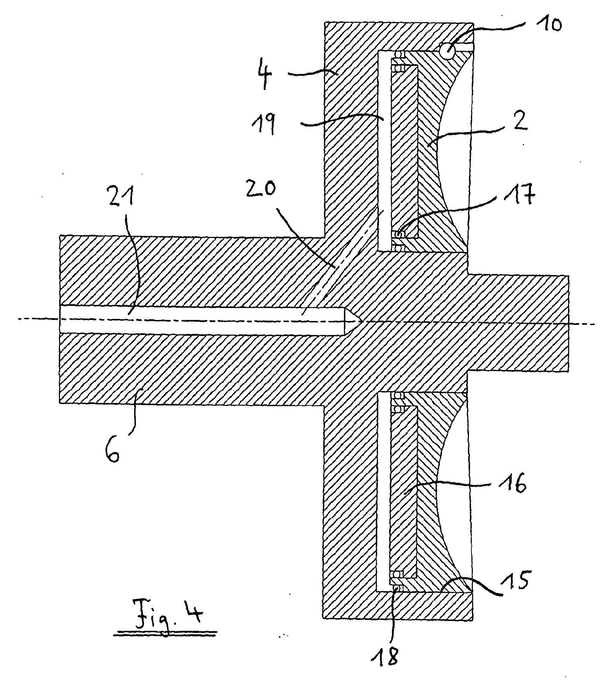

**Figur 4** zeigt ein Ausführungsbeispiel, bei dem die Traktionsscheibe 2 axial verschieblich in einer ringzylindrischen Ausnehmung 15 der Stützscheibe 4 angeordnet ist. Die Traktionsscheibe 2 ist über Kugeln 10 drehfest mit der Stützscheibe 4 gekoppelt. An der Rückseite der Traktionsscheibe 2 ist ein ringförmiges Stützelement 16 angeordnet. Die Traktionsscheibe 2 ist mittels Dichtringen 17, 18 fluiddicht bzw, druckdicht gegenüber der Stützscheibe 4 abgedichtet. Zwischen der Rückseite der Traktionsscheibe 2 bzw. des Stützelementes 16 und der Stützscheibe 4 ist eine Druckkammer 19 vorgesehen, die über eine Verbindungsbohrung 20 in Fluidverbindung mit einem Fluidkanal 21 steht, der sich axial in der Welle 6 erstreckt, die hier einstückig mit der Stützscheibe 4 verbunden ist.

Über den Fluidkanal kann Fluid, z.B. Öl in die Druckkammer eingebracht bzw. daraus abgeführt werden, was ein axiales Verschieben der Traktionsscheibe 2 relativ zur Stützscheibe 4 ermöglicht.

## Patentansprüche

1. Toroid-Getriebescheibe (1) mit einer konkav gekrümmten Lauffläche (3), auf der Roller eines Toroidgetriebevariators abrollbar sind, wobei die Toroid-Getriebescheibe (1) zwei Teilscheiben aufweist, nämlich eine Traktionsscheibe (2), in der die Lauffläche (3) ausgebildet ist und eine Stützscheibe (4), die koaxial zur Traktionsscheibe (2) angeordnet ist und die Axialkräfte, welche von den Rollern über die Lauffläche (3) in die Traktionsscheibe (2) eingeleitet werden, abstützt, wobei die Traktionsscheibe (2) einen axial abstehenden Zentrierbund (8) aufweist, der am Außenumfang der Stützscheibe (4) anliegt und die Traktionsscheibe (2) relativ zur Stützscheibe (4) zentriert, **dadurch gekennzeichnet, dass**
die Teilscheiben (2, 4) aus unterschiedlichen Materialien bestehen, wobei das Material der Traktionsscheibe (2) einen geringeren Elastizitätsmodul aufweist als das Material der Stützscheibe (4).

2. Toroid-Getriebescheibe (1), nach Anspruch 1 wobei das Material der Stützscheibe (4) eine geringere Dichte aufweist als das Material der Traktionsscheibe (2).

3. Toroid-Getriebescheibe (1) nach einem der Ansprüche 1 oder 2, wobei die Traktionsscheibe (2) und die Stützscheibe (4) in Umfangsrichtung formschlüssig miteinander verbunden sind.

4. Toroid-Getriebescheibe (1) nach einem Ansprüche 1 bis 3, wobei die Traktionsscheibe (2) und die Stützscheibe (4) jeweils Ausnehmungen aufweisen, in die jeweils eine Kugel (10) eingreift, welche die Traktionsscheibe (2) und die Stützscheibe (4) in Umfangsrichtung formschlüssig verbinden, wobei in Umfangsrichtung verteilt mehrere Kugeln (10) vorgesehen sind.

5. Toroid-Getriebescheibe (1) nach einem der Ansprüche 1 bis 4, wobei die Traktionsscheibe (2) und die Stützscheibe (4) auf einer gemeinsamen Welle (6) angeordnet sind und wobei die Stützscheibe (4) drehfest mit der Welle (6) verbunden ist.

6. Toroid-Getriebescheibe (1) nach einem der Ansprüche 1 bis 5, wobei die Traktionsscheibe (2) und die Stützscheibe (4) über zwei radial voneinander beabstandete ringförmige Berührflächen (11, 12) aneinander anliegen.

7. Toroid-Getriebescheibe (1) nach einem der Ansprüche 1 bis 6, wobei die Traktionsscheibe (2) und die Stützscheibe (4) in Axialrichtung durch eine mit einem Fluid gefüllte Kammer (19) voneinander beabstandet sind, wobei die Traktionsscheibe (2) in Axialrichtung relativ zur Stützscheibe (4) verschiebbar ist, indem Fluid in die Kammer (19) eingebracht oder aus der Kammer (19) abgeführt wird.

8. Toroid-Getriebescheibe (1) nach einem Ansprüche 1 bis 7, wobei die Stützscheibe (4) eine ringzylindrische Ausnehmung (15) aufweist, in der die Traktionsscheibe (2) axial verschieblich angeordnet ist, wobei durch die Ausnehmung (15) und die Traktionsscheibe (2) eine mit einem Fluid gefüllte Kammer (19) gebildet ist.

9. Toroid-Getriebescheibe (1) nach Anspruch 8, wobei die Stützscheibe (4) mit einem Wellenabschnitt (6),verbunden ist, wobei in der Welle (6) ein zentraler Fluidkanal (21) vorgesehen ist, der mit der Kammer (19) in Fluidverbindung steht.

## Claims

1. A toroidal drive disc (1) with a concave bearing surface (3) on which the rollers of a toroidal drive variable-speed gear roll, wherein the toroidal drive disc (1) has two component drives, i.e. a traction drive (2) in which the bearing surface (3) is formed and a back-up drive (4) which is coaxial with the traction disc (2) and receives the axial forces introduced by the rollers into the traction disc (2) via the bearing surface (3), wherein the traction disc (2) has an axially projecting centring collar (8) which abuts the outer periphery of the back-up disc (4) and centres the traction disc (2) relative to the back-up disc (4), **characterised in that**
the component discs (2, 4) are made of different materials, wherein the material of the traction disc (2) has a lower elastic modulus than the material of the back-up disc (4).

2. A toroidal drive disc (1) according to claim 1, wherein the material of the back-up disc (4) has a lower density than the material of the traction disc (2).

3. A toroidal drive disc (1) according to claim 1 or claim 2, wherein the traction disc (2) and the back-up disc (4) are positively connected to one another in the peripheral direction.

4. A toroidal drive disc (1) according to claims 1 to 3, wherein the traction disc (2) and the back-up disc (4) each have recesses which engage respective balls (10) which positively connect the traction disc (2) to the back-up disc (4) in the peripheral direction, wherein a number of balls (10) are distributed in the peripheral direction.

5. A toroidal drive disc (1) according to any of claims 1 to 4, wherein the traction disc (2) and the back-up disc (4) are disposed on a common shaft (6) and wherein the back-up disc (4) is co-rotatably connected to the shaft (6).

6. A toroidal drive disc (1) according to any of claims 1 to 5, wherein the traction disc (2) and the back-up disc (4) abut one another via two radially spaced annular contact surfaces (11, 12).

7. A toroidal drive disc (1) according to any of claims 1 to 6, wherein the traction disc (2) and the back-up disc (4) are spaced apart in the axial direction by a fluid-filled chamber (19), wherein the traction disc (2) is movable in the axial direction relative to the back-up disc (4) by introducing fluid into or withdrawing it from the chamber (19).

8. A toroidal drive disc (1) according to any of claims 1 to 7, wherein the back-up disc (4) has a circular cylindrical recess (15) in which the traction disc (2) is axially movable, wherein a chamber (19) filled with fluid is formed by the recess (15) and the traction disc (2).

9. A toroidal drive disc (1) according to claim 8, wherein the back-up disc (4) is connected to a shaft portion (6) and a central fluid duct (21) is provided in the shaft (6) and is in fluid connection with the chamber (19).

## Revendications

1. Disque de transmission toroïdal (1) ayant une surface de circulation (3) à courbure concave sur laquelle roulent les galets d'un variateur toroïdal, le disque de transmission toroïdal (1) ayant deux disques partiels à savoir un disque de traction (2) muni de la surface de circulation (3) et un disque d'appui (4) coaxial au disque de traction (2) et les efforts axiaux exercés par les galets sur la surface de circulation (3) sont induits dans le disque de traction (2) pour être absorbés, le disque de traction (2) ayant une collerette de centrage (8) axialement en saillie appliquée contre la périphérie extérieure du disque d'appui (4) et assurant le centrage du disque de traction (2) par rapport au disque d'appui (4)
**caractérisé en ce que**
les disques partiels (2, 4) sont dans des matières différentes,
la matière du disque de traction (2) a un module d'élasticité plus faible que celui de la matière du disque d'appui (4).

2. Disque de transmission toroïdal (1) selon la revendication 1,
dans lequel
la matière du disque d'appui (4) a une densité moindre que la matière du disque de traction (2).

3. Disque de transmission toroïdal (1) selon l'une des revendications 1 ou 2,
dans lequel
le disque de traction (2) et le disque d'appui (4) sont reliés l'un à l'autre dans la direction périphérique par une liaison par la forme.

4. Disque de transmission toroïdal (1) selon l'une des revendications 1 à 3,
dans lequel
le disque de traction (2) et le disque d'appui (4) ont chacun des cavités dans lesquelles pénètre chaque fois une bille (10) reliant par une liaison de forme dans la direction périphérique le disque de traction (2) et le disque d'appui (4), plusieurs billes étant prévues et réparties dans la direction périphérique.

5. Disque de transmission toroïdal (1) selon l'une des revendications 1 à 4,
dans lequel
le disque de traction (2) et le disque d'appui (4) sont installés sur un arbre commun (6) et le disque d'appui (4) est relié solidairement en rotation à l'arbre (6).

6. Disque de transmission toroïdal (1) selon l'une des revendications 1 à 5,
dans lequel
le disque de traction (2) et le disque d'appui (4) sont appliqués l'un contre l'autre par deux surfaces de contact (11, 12), de forme annulaire écartées radialement.

7. Disque de transmission toroïdal (1) selon l'une des revendications 1 à 6,
dans lequel
le disque de traction (2) et le disque d'appui (4) sont écartés l'un de l'autre dans la direction axiale par une chambre (19) remplie de liquide, le disque de traction (2) pouvant coulisser dans la direction axiale par rapport au disque d'appui (4) en introduisant du liquide dans la chambre (19) ou en évacuant du liquide de la chambre (19).

8. Disque de transmission toroïdal (1) selon l'une des revendications 1 à 7,
dans lequel
le disque d'appui (4) a une cavité cylindrique annulaire (15) recevant le disque de traction (2) de façon axialement coulissante, la cavité (15) et le disque de traction (2) forment une chambre (19) remplie de liquide.

9. Disque de transmission toroïdal (1) selon la revendication 8,
dans lequel
le disque d'appui (4) est relié à un segment d'arbre (6), et le segment d'arbre (6) comporte un canal central de fluide (21) en communication fluidique avec la chambre (19).
